# EUROPÄISCHE PATENTSCHRIFT

(11) **EP 3 816 620 B1**
(45) Veröffentlichungstag und Bekanntmachung des Hinweises auf die Patenterteilung: **02.07.2025**
(21) Anmeldenummer: 19206211.5
(22) Anmeldetag: 30.10.2019
(51) Int. Cl.: G01N 29/04, G01N 29/22, G01N 29/265

(54) **SCHWEISSNAHTPRÜFKETTE**
WELDING SEAM TEST CHAIN
CHAINE DE VÉRIFICATION DU CORDON DE SOUDURE

(43) Veröffentlichungstag der Anmeldung: 05.05.2021
(73) Patentinhaber: Georg Fischer Rohrleitungssysteme AG, 8201 Schaffhausen (CH)
(72) Erfinder: Barbone, Riccardo, 8200 Schaffhausen (CH); Wermelinger, Jörg, 8200 Schaffhausen (CH)
(74) Vertreter: Fenner, Seraina

(56) Entgegenhaltungen:
- KR-B1- 101 645 977
- US-A- 4 844 396

## Beschreibung

Die Erfindung betrifft eine Schweissnahtprüfkette zum Prüfen einer Schweissnaht mittels Ultraschall von zwei stirnseitig miteinander verschweissten Kunststoffrohren enthaltend Standard-Kettenglieder, wobei die Standard-Kettenglieder zum Bilden der Schweissnahtprüfkette miteinander verhakt sind und die Kette individuell verlängerbar oder verkürzbar ist, einen Sensorhalter zur Aufnahme des Ultraschallsensors und eine Einstelleinheit zur Feinjustierung der Schweissnahtprüfkettenlänge.

Mittels der Kette wird der Ultraschallsensor um den Umfang der Rohrleitung rotiert und prüft die Schweissnaht am kompletten Umfang mittels Ultraschall ohne das Rohr selbst zu rotieren und ohne es zu zerstören.

Die zerstörungsfreie Untersuchung von Prüfobjekten mittels Ultraschall ist Stand der Technik und wird in vielen Bereichen wie z. B. im Flugzeugbau eingesetzt.

Dieses Verfahren wird hauptsächlich bei metallischen Werkstoffen angewandt da diese eine gute Schallleitfähigkeit aufweisen.

Die Ultraschallprüfung soll dem Auffinden von inneren und äusseren Fehlern dienen, die ohne eine Zerstörung des Prüfobjekts nicht erkennbar wären.

Die US 5 824 908 offenbart ein solches Prüfverfahren, das Fehler in Materialien aufgrund von Ultraschallwellen erkennen lässt.

Nachteilig an dem offenbarten Verfahren ist jedoch, dass das System nur auf Platten und nur für Materialien, die eine gewisse Homogenität ohne strukturelle Veränderung des Materials aufweisen, anwendbar ist.

Die CN 110031549 A1 offenbart eine Vorrichtung zur Überprüfung der Schweissnaht von miteinander verschweissten Rohren.

Nachteilig an dieser Ausführungsform ist, dass sie viele miteinander verschraubte Einzelteile aufweist, was eine aufwendige Montage der Kette am Rohr mit sich bringt und durch die Vielzahl an Rollen neigt die Kette zur Verschmutzung und ist sehr wartungsintensiv.

KR 101 645 977 B1 zeigt eine Prüfkette zum Prüfen eines Rotors einer Turbine mittels Ultraschall.

Es ist Aufgabe der Erfindung eine Schweissnahtprüfkette vorzuschlagen, welche ein einfaches Montieren einer Ultraschallprüfvorrichtung bzw. eines Senders und Empfängers einer solchen zum Prüfen von Schweissnähten an verschweissten Kunststoffrohrleitungen ermöglicht und auf unterschiedliche Rohrdurchmesser mit geringem Aufwand adaptierbar ist wie auch dass sie einfach in der Wartung ist.

Diese Aufgabe wird erfindungsgemäss dadurch gelöst, dass die Standard-Kettenglieder an der einen Seite einen Haken und auf der gegenüberliegenden Seite eine Hakenaufnahme aufweisen, wodurch die einzelnen Kettenglieder miteinander verhakbar sind.

Die erfindungsgemässe Schweissnahtprüfkette zum Prüfen einer Schweissnaht mittels Ultraschall von zwei stirnseitig miteinander verschweissten Kunststoffrohren beinhaltet mehrere Standard-Kettenglieder. Die Standard-Kettenglieder sind zum Bilden der Schweissnahtprüfkette miteinander verhakt. Durch das Hinzufügen oder Entfernen von Standardkettenglieder in der Schweissnahtprüfkette ist die Kette individuell verlängerbar oder verkürzbar und dadurch für unterschiedliche Rohrdurchmesser einsetzbar. Die Schweissnahtprüfkette weist eine Sensoraufnahme zur Aufnahme des Ultraschallsensors auf bzw. des Senders und Empfängers des Ultraschallsensors. Zur Feinjustierung der Schweissnahtprüfkettenlänge weist die erfindungsmässe Schweissnahtprüfkette eine Einstelleinheit auf. Die Standard-Kettenglieder, welche miteinander verhakt sind weisen an der einen Seite einen Haken und auf der gegenüberliegenden Seite eine Hakenaufnahme auf. Durch die Verbindung mittels Haken und Hakenaufnahme ist es ein einfaches die Standard-Kettenglieder miteinander zu verbinden oder voneinander zu lösen, dies macht eine rasche Anpassung der Kettenlänge möglich.

Es hat sich als vorteilhaft gezeigt, wenn die Standard-Kettenglieder als 3D Druck Teile hergestellt sind, vorzugsweise aus einem Polymer. Selbstverständlich sind auch andere Herstellverfahren denkbar, wobei die Standard-Kettenglieder aus Kunststoff sind.

Vorzugsweise weist das Standard-Kettenglied auf der Seite der Hakenaufnahme Auflageflächen auf, wobei die Auflageflächen als Radien ausgebildet sind um direkt am Aussenmantel des verschweissten Rohres aufzuliegen. Dadurch entsteht nur eine linienartige Auflagefläche zwischen den Standard-Kettengliedern und dem Rohraussenmantel, wodurch sich die Kette einfach rotieren lässt und gut am Aussendurchmesser anliegt, unabhängig der Rohrdimension.

Als vorteilhaft hat sich gezeigt, wenn das Standard-Kettenglied einteilig ausgebildet ist und direkt am Aussenmantel der verschweissten Rohre anliegt. Durch die einteilige Ausbildung des Standard-Kettenglieds und den Auflageflächen die als Radien ausgebildet sind kann auf separate Rollen verzichtet werden. Vorzugsweise weist das Standard-Kettenglied auf der Seite der Hakenaufnahme eine gabelförmige Ausgestaltung mit vorzugsweise zwei Streben auf.

Vorzugsweise sind die Auflageflächen der Standard-Kettenglieder starr und integral am Standard-Kettenglied angeordnet. Es ist vorteilhaft, wenn die Auflageflächen an den beiden Streben der gabelförmigen Seite der Hakenaufnahme angeordnet sind.

Als bevorzugte Ausführungsform hat sich gezeigt, wenn die Einstelleinheit der erfindungsgemässen Schweissnahtprüfkette zwei gegenseitig zueinander verschiebbare Stellelemente aufweist. Vorzugsweise greifen die Stellelemente ineinander und sind mittels einer Schraube stufenlos einstellbar und arretierbar.

Als vorteilhaft hat sich gezeigt, wenn die Sensoraufnahme als Kettenglied ausgebildet ist. Dadurch kann die Sensoraufnahme ohne grossen Aufwand an die Standard-Kettenglieder, die Einstelleinheit, die Halterung für einen Winkelgeber oder einem den Anschlussmöglichkeiten der Kettenglieder entsprechenden Element angeordnet werden.

Als bevorzugte Ausführungsform hat sich gezeigt, wenn die Vorlaufkeile zur Aufnahme des Ultraschallsensors an der Sensoraufnahme angeordnet sind, wobei die Vorlaufkeile verstellbar am Sensorhalter angeordnet sind. Vorzugsweise sind zwei Vorlaufkeile an der Sensoraufnahme angeordnet, wobei der einen den Sender und der andere den Empfänger des Ultraschallsensors aufnimmt.

Vorzugweise ist ein Spannsystem an der Sensoraufnahme angeordnet, wobei das Spannsystem einen konstanten Anpressdruck auf die Vorlaufkeile die am Aussenmantel des Rohres anliegen ausübt. Es hat sich als vorteilhaft gezeigt, wenn das Spannsystem durch federnde Elemente gebildet wird, welche die Vorlaufkeile an die Mantelfläche des Rohres anpressen, wobei die federnden Elemente vorzugsweise auch zur Positionierung der Vorlaufkeile an der Sensoraufnahme dienen und die Vorlaufkeile vorzugsweise verstellbar angeordnet werden können.

Vorteilhaft ist es, wenn die Vorlaufkeile ein Aussengehäuse und ein Innenelement aufweisen. Vorzugsweise weisen das Aussengehäuse und das Innenelement unterschiedliche Materialen auf. Als vorteilhaftes Material bei Ultraschallprüfungen hat sich PTFE gezeigt, weshalb das Innenelement vorzugsweise aus PTFE hergestellt ist.

Vorzugsweise weist die erfindungsgemässe Schweissnahtprüfkette eine Halterung zur Befestigung eines Winkelgebers auf, wobei die Halterung als Kettenglied ausgebildet ist. Dies ermöglicht ebenfalls ein einfaches Einbauen in die Schweissnahtprüfkette bzw. an die Standard-Kettenglieder oder die anderen Glieder die entsprechend ausgebildet sind um in die Kette adaptierbar zu sein.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Darstellung eines Teilstücks der erfindungsgemässen Schweissnahtprüfkette am Rohr,
- Fig. 2: eine Draufsicht der erfindungsgemässen Schweissnahtprüfkette im Bereich Sensoraufnahme,
- Fig. 3: eine dreidimensionale Darstellung zweier miteinander verhakten Standard-Kettenglieder,

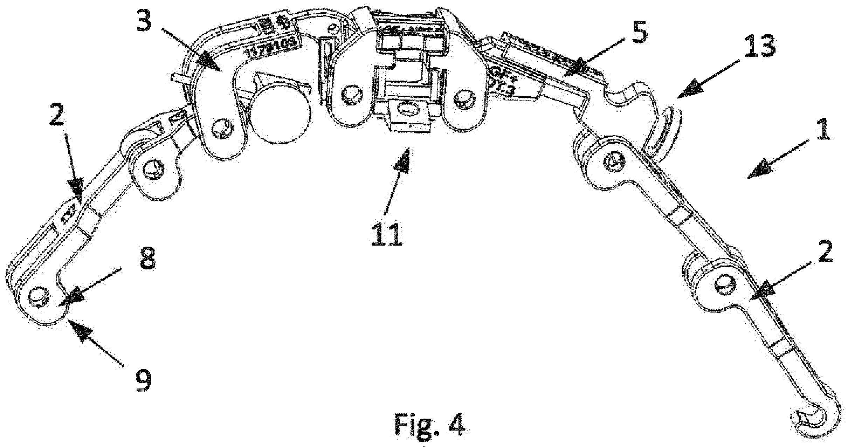

- Fig. 4: eine dreidimensionale Darstellung eines Teilstücks der erfindungsgemässen Schweissnahtprüfkette,
- Fig. 5: eine dreidimensionale Darstellung eines Teilstücks der erfindungsgemässen Schweissnahtprüfkette von unten,

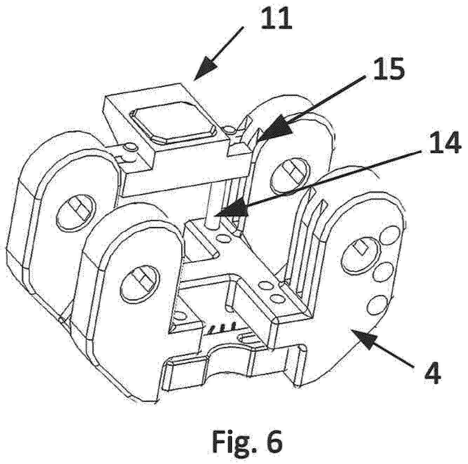

- Fig. 6: eine dreidimensionale Darstellung einer Sensoraufnahme von unten und

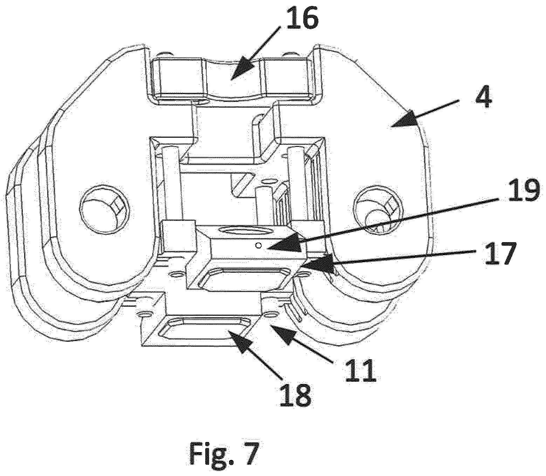

- Fig. 7: eine dreidimensionale Darstellung einer Sensoraufnahme.

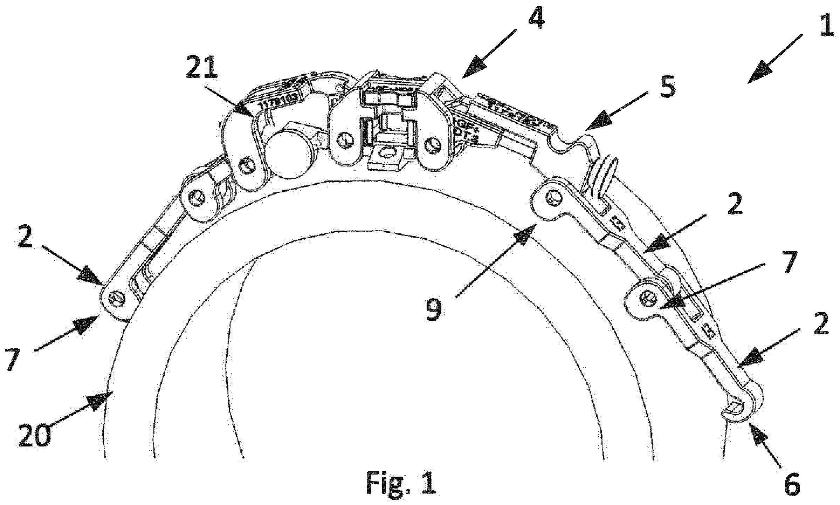

Die in Fig. 1 dargestellte erfindungsgemässe Schweissnahtprüfkette 1 zum Prüfen von Schweissnähten an stumpfgeschweissten Kunststoffrohren beinhaltet Standard-Kettenglieder 2, wobei die Standard-Kettenglieder 2 durch blosses Verhaken miteinander verbunden sind. Durch das Einhängen und Aushängen von Standard-Kettengliedern kann die Kette beliebig verlängert oder verkürzt werden. Die Standard-Kettenglieder 2 weisen dazu an der einen Seite einen Haken 6 und auf der anderen Seite eine Hakenaufnahme 7 auf. Die erfindungsgemässe Schweissnahtprüfkette 1 weist ebenso eine Sensoraufnahme 4 auf die der Aufnahme des Ultraschallsensors dient, bzw. des Senders und des Empfängers des Ultraschallsensors. Um die Länge der Schweissnahtprüfkette 1 genau einzustellen beinhaltet die Kette 1 eine Einstelleinheit 5.

Die Standard-Kettenglieder 2 weisen auf der Seite der Hakenaufnahme 7 Auflageflächen 9 auf, wobei die Aufnahmeflächen 9 durch Radien 8 gebildet werden die integral am Standard-Kettenglied 2 angeordnet sind. Durch die Radien 8, welche direkt am Mantelumfang des Rohres anliegen entsteht nur eine lineare Auflagefläche 9 wodurch die erfindungsgemässe Kette gut am Aussenmantel anliegt und sich auch einfach um den Umfang rotieren lässt. Die Auflageflächen 9 sind am einteiligen Standard-Kettenglied 2 integral und somit auch starr angeordnet. Die Radien 8 am Standard-Kettenglied 2 bilden eine herausragende Nase auf der Seite der Hakenaufnahme 7 um vorzugsweise einen Bolzen (nicht dargestellt) vorzusehen in den der Haken 6 eingehängt wird. Die herausragende Nase dient auch dazu, dass das Standard-Kettenglied 2 vom Aussenmantel des Rohres 20 distanziert ist bzw. ausschliesslich mit der Auflagefläche 9 am Aussenmantel anliegt.

Die Hakenaufnahme 7 ist vorzugsweise gabelförmig ausgebildet und weist zwei Streben 12 auf zwischen denen der Haken 6 eingehängt wird, wobei ein Bolzen (nicht dargestellt) zwischen den Streben 12 verläuft, wobei der Bolzen als separates Teil oder ebenfalls integral am Standard-Kettenglied 2 angeordnet ist.

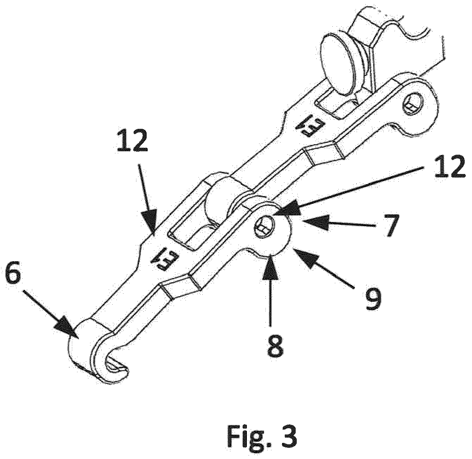

Das Standard-Kettenglied 2 ist, wie in Fig. 3 gut ersichtlich einteilig, ausgebildet aus Kunststoff und speziell bevorzugt im 3D Druckverfahren hergestellt.

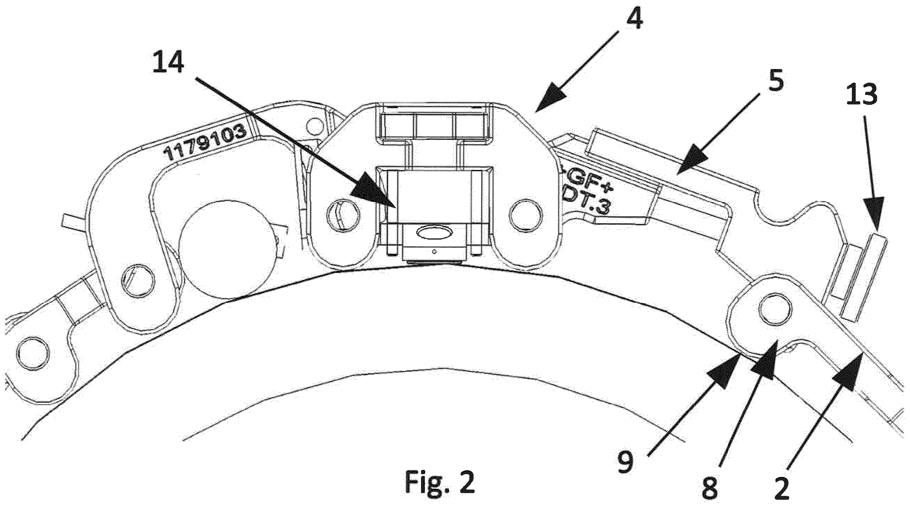

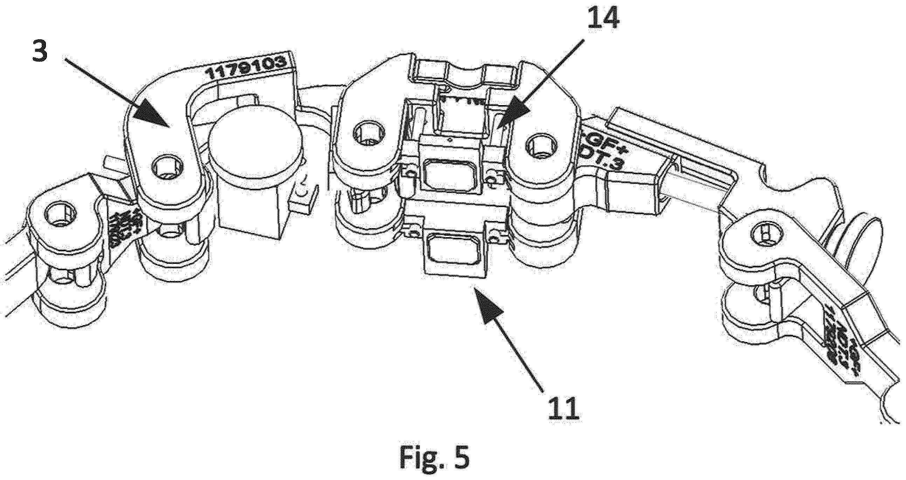

In Fig. 2 sind die weiteren Elemente der erfindungsgemässen Schweissnahtprüfkette 1 ersichtlich wie die Einstelleinheit 5 welche vorzugsweise zwei zueinander verschiebbare Stellelemente 10 beinhaltet. Mittels einer Stellschraube 13 kann die Länge der Kette 1 dann entsprechend genau eingestellt werden. Zur Sicherstellung, dass die Prüfung der Schweissnaht am gesamten Umfang erfolgt ist, ist es vorteilhaft einen Winkelgeber 21 an der Kette 1 vorzusehen. Um diesen an der Kette 1 zu befestigen ist ein Kettenglied als Halterung 3 für einen Winkelgeber ausgebildet und weist entsprechende Befestigungsmöglichkeiten auf. Die Halterung 3 wie auch die Sensoraufnahme 4 und die Einstelleinheit 5 sind an ihren Enden derart ausgebildet, dass sie einfach an die Standard-Kettenglieder 2 adaptiert werden können da sie dieseleben Enden aufweisen und somit kompatibel sind. Fig. 5 zeigt die erfindungsgemässe Kette 1 von unten, wodurch die Vorlaufkeile 11, welche den Sender und Empfänger des Ultraschallsensors aufnehmen, gut ersichtlich sind. Die Vorlaufkeile 11 sind verstellbar mittels einer Führung 15 in der Sensoraufnahme 4 angeordnet. Vorzugsweise werden die Vorlaufkeile 11 mittels eines Spannsystems 14 an die Mantelfläche des Rohres 20 gepresst um eine optimale Ultraschallprüfung durchführen zu können. Vorzugsweise werden dazu Federelemente eingesetzt (nicht dargestellt). Vorteilhaft ist es, wenn ein Sicherheitsklipp 16 die Vorlaufkeile in der Sensoraufnahme 4 sichert. Zudem sind die Vorlaufkeile 11 vorzugsweise zueinander verstellbar angeordnet, was erlaubt unterschiedliche Breiten von Schweissnähten zu prüfen, wobei die Verstellung stufenlos oder mit vorgegeben Positionen vorgesehen ist.

Die Vorlaufkeile 11 weisen ein Aussengehäuse 17 und ein Innenelement 18 auf. Durch die zweiteilige Form ist ein Austausch bei einer Abnützung der Innenelemente einfach umzusetzen da das Innenelement einfach in das Aussengehäuse 17 eingeklippt ist. Zudem ist das Innenelement 18 vorzugsweise aus PTFE welches für das Übertragen der Ultraschallwellen zu bevorzugen ist. Zudem wird über eine Bohrung 19 im Aussengehäuse 17 entlüftet.

### Bezugszeichenliste

- 1: Schweissnahtprüfkette
- 2: Standard-Kettenglied
- 3: Halterung für Winkelgeber
- 4: Sensoraufnahme
- 5: Einstelleinheit
- 6: Haken
- 7: Hakenaufnahme
- 8: Radius
- 9: Auflagefläche
- 10: Stellelement
- 11: Vorlaufkeile
- 12: Strebe Hakenaufnahme
- 13: Stellschraube
- 14: Spannsystem
- 15: Führung
- 16: Sicherheitsklipp
- 17: Aussengehäuse
- 18: Innenelement
- 19: Bohrung
- 20: Rohr
- 21: Winkelgeber

## Patentansprüche

1. Schweissnahtprüfkette (1) zum Prüfen einer Schweissnaht mittels Ultraschall von zwei stirnseitig miteinander verschweissten Kunststoffrohren (20) enthaltend Standard-Kettenglieder (2), wobei die Standard-Kettenglieder zum Bilden der Schweissnahtprüfkette miteinander verhakt sind und die Kette (1) individuell verlängerbar oder verkürzbar ist, eine Sensoraufnahme (4) zur Aufnahme des Ultraschallsensors und eine Einstelleinheit (5) zur Feinjustierung der Schweissnahtprüfkettenlänge, **dadurch gekennzeichnet, dass** die Standard-Kettenglieder (2) an der einen Seite einen Haken (6) und auf der gegenüberliegenden Seite eine Hakenaufnahme (7) aufweisen, wodurch die einzelnen Kettenglieder miteinander verhakbar sind, wobei die Standard-Kettenglieder aus Kunststoff sind.

2. Schweissnahtprüfkette (1) nach Anspruch 1, **dadurch gekennzeichnet, dass** das Standard-Kettenglied (2) auf der Seite der Hakenaufnahme (7) Auflageflächen (9) aufweist, wobei die Auflageflächen (9) als Radien (8) ausgebildet sind und direkt am Aussenmantel des verschweissten Rohres (20) anliegen.

3. Schweissnahtprüfkette (1) nach einem der Ansprüche 1 oder 2, **dadurch gekennzeichnet, dass** das Standard-Kettenglied (2) einteilig ausgebildet ist und direkt am Aussenmantel der verschweissten Rohre (20) anliegt.

4. Schweissnahtprüfkette (1) nach Anspruch 2 oder 3, **dadurch gekennzeichnet, dass** die Auflageflächen der Standard-Kettenglieder (2) starr und integral am Kettenglied angeordnet sind.

5. Schweissnahtprüfkette (1) nach einem der Ansprüche 1 bis 4, **dadurch gekennzeichnet, dass** die Einstelleinheit (5) zwei gegenseitig zueinander verschiebbare Stellelemente (10) aufweist.

6. Schweissnahtprüfkette (1) nach einem der Ansprüche 1 bis 5, **dadurch gekennzeichnet, dass** die Sensoraufnahme (4) als Kettenglied ausgebildet ist.

7. Schweissnahtprüfkette (1) nach einem der Ansprüche 1 bis 6, **dadurch gekennzeichnet, dass** Vorlaufkeile (11) zur Aufnahme der Ultraschallsensoren an der Sensoraufnahme (4) angeordnet sind, wobei die Vorlaufkeile (11) verstellbar am Sensorhalter (4) angeordnet sind.

8. Schweissnahtprüfkette (1) nach Anspruch 7, **dadurch gekennzeichnet, dass** ein Spannsystem (14) an der Sensoraufnahme (4) angeordnet ist, wobei das Spannsystem (14) einen konstanten Anpressdruck auf die Vorlaufkeile (11), die am Aussenmantel des Rohres (20) anliegen ausübt.

9. Schweissnahtprüfkette (1) nach Anspruch 7, **dadurch gekennzeichnet, dass** die Vorlaufkeile (11) ein Aussengehäuse (17) und ein Innenelement (18) aufweisen.

10. Schweissnahtprüfkette (1) nach einem der Ansprüche 1 bis 9, **dadurch gekennzeichnet, dass** eine Halterung (3) zur Befestigung eines Winkelgebers in der Schweissnahtprüfkette (1) angeordnet ist, wobei die Halterung (3) als Kettenglied ausgebildet ist.

## Claims

1. Weld seam testing chain (1) for testing a weld seam by means of ultrasound on two plastic tubes (20) welded together at the ends, comprising standard chain links (2), wherein the standard chain links are hooked together to form the weld seam testing chain, and the chain (1) can be lengthened or shortened individually, a sensor receptacle (4) for accommodating the ultrasonic sensor, and an adjusting unit (5) for the fine adjustment of the weld seam testing chain length, **characterized in that** the standard chain links (2) have a hook (6) on one side and a hook receptacle (7) on the opposite side, thereby enabling the individual chain links to be hooked together, wherein the standard chain links are composed of plastic.

2. Weld seam testing chain (1) according to Claim 1, **characterized in that** the standard chain link (2) has bearing surfaces (9) on the side of the hook receptacle (7), wherein the bearing surfaces (9) are designed as radii (8) and rest directly against the outer shell of the welded tube (20).

3. Weld seam testing chain (1) according to either of Claims 1 or 2, **characterized in that** the standard chain link (2) is of one-piece design and rests directly on the outer shell of the welded tube (20).

4. Weld seam testing chain (1) according to Claim 2 or **3, characterized in that** the bearing surfaces of the standard chain links (2) are arranged rigidly and integrally on the chain link.

5. Weld seam testing chain (1) according to any of Claims 1 to 4, **characterized in that** the adjusting unit (5) has two adjusting elements (10), which can be moved relative to one another.

6. Weld seam testing chain (1) according to any of Claims 1 to 5, **characterized in that** the sensor receptacle (4) is designed as a chain link.

7. Weld seam testing chain (1) according to any of Claims 1 to 6, **characterized in that** lead wedges (11) for receiving the ultrasonic sensors are arranged on the sensor receptacle (4), wherein the lead wedges (11) are arranged adjustably on the sensor holder (4).

8. Weld seam testing chain (1) according to Claim 7, **characterized in that** a clamping system (14) is arranged on the sensor receptacle (4), wherein the clamping system (14) exerts a constant contact pressure on the lead wedges (11), which rest on the outer shell of the tube (20).

9. Weld seam testing chain (1) according to Claim 7, **characterized in that** the lead wedges (11) have an outer housing (17) and an inner element (18).

10. Weld seam testing chain (1) according to any of Claims 1 to 9, **characterized in that** a holder (3) for securing an angle sensor is arranged in the weld seam testing chain (1), wherein the holder (3) is designed as a chain link.

## Revendications

1. Chaîne de vérification du cordon de soudure (1) pour vérifier un cordon de soudure, au moyen d'ultrasons, de deux tubes constitués de matière plastique (20) soudés bout à bout, contenant des maillons de chaîne standard (2), les maillons de chaîne standard étant accrochés les uns aux autres pour former la chaîne de vérification du cordon de soudure et la chaîne (1) pouvant être individuellement allongée ou raccourcie, un logement de capteur (4) pour le logement du capteur à ultrasons et une unité de réglage (5) pour l'ajustement précis de la longueur de la chaîne de vérification du cordon de soudure, **caractérisée en ce que** les maillons de chaîne standard (2) présentent sur un côté un crochet (6) et sur le côté opposé un logement de crochet (7), permettant ainsi d'accrocher les maillons individuels les uns aux autres, les maillons de chaîne standard étant constitués de matière plastique.

2. Chaîne de vérification du cordon de soudure (1) selon la revendication 1, **caractérisée en ce que** le maillon de chaîne standard (2) présente sur le côté du réceptacle de crochet (7) des surfaces d'appui (9), les surfaces d'appui (9) étant réalisées sous forme de rayons (8) et reposant directement sur l'enveloppe externe du tube soudé (20).

3. Chaîne de vérification du cordon de soudure (1) selon l'une quelconque des revendications 1 ou 2, **caractérisée en ce que** le maillon de chaîne standard (2) est réalisé d'une seule pièce et repose directement sur l'enveloppe externe des tubes soudés (20).

4. Chaîne de vérification du cordon de soudure (1) selon la revendication 2 ou 3, **caractérisée en ce que** les surfaces d'appui des maillons de chaîne standard (2) sont disposées de manière rigide et solidaire sur le maillon de chaîne.

5. Chaîne de vérification du cordon de soudure (1) selon l'une quelconque des revendications 1 à 4, **caractérisée en ce que** l'unité de réglage (5) présente deux éléments de réglage (10) mutuellement déplaçables l'un par rapport à l'autre.

6. Chaîne de vérification du cordon de soudure (1) selon l'une quelconque des revendications 1 à 5, **caractérisée en ce que** le logement de capteur (4) est réalisé sous forme de maillon de chaîne.

7. Chaîne de vérification du cordon de soudure (1) selon l'une quelconque des revendications 1 à 6, **caractérisée en ce que** des sabots (11) permettant de recevoir les capteurs à ultrasons sont disposés sur le logement de capteur (4), les coins de contact (11) étant disposés de manière réglable sur le logement de capteur (4).

8. Chaîne de vérification du cordon de soudure (1) selon la revendication 7, **caractérisée en ce qu'**un système de tension (14) est disposé sur le logement de capteur (4), le système de tension (14) exerçant une pression d'appui constante sur les sabots (11), qui reposent sur l'enveloppe externe du tube (20).

9. Chaîne de vérification du cordon de soudure (1) selon la revendication 7, **caractérisée en ce que** les sabots (11) présentent un boîtier externe (17) et un élément interne (18).

10. Chaîne de vérification du cordon de soudure (1) selon l'une quelconque des revendications 1 à 9, **caractérisée en ce qu'**un support (3) pour la fixation d'un codeur angulaire est disposé dans la chaîne de vérification du cordon de soudure (1), le support (3) étant réalisé sous forme de maillon de chaîne.
